# FASCICULE DE BREVET EUROPEEN

(11) **EP 2 976 560 B1**
(45) Date de publication et mention de la délivrance du brevet: **06.06.2018**
(21) Numéro de dépôt: 14711770.9
(22) Date de dépôt: 21.03.2014
(51) Int. Cl.: F16K 15/18, F16K 17/04, F16K 17/168, F16K 31/50, F16K 1/10

(54) **VALVE ET CHAUDIÈRE COMPRENANT UNE TELLE VALVE**
VENTIL UND EIN KESSEL MIT SOLCHEM VENTIL
VALVE AND A BOILER CONTAINING SUCH A VALVE

(30) Priorité: 21.03.2013 FR 1352539
(43) Date de publication de la demande: 27.01.2016
(73) Titulaire: Société Technique pour l'Energie Atomique, 91190 Villiers Le Bacle (FR)
(72) Inventeur: GREBERT, Romain, F-13170 Le Puy Sainte Reparade (FR); HOEBEKE, Gilles, F-83190 Pourrieres (FR)
(74) Mandataire: Lavoix
(86) Numéro de dépôt international: PCT/EP2014/055736
(87) Numéro de publication internationale: WO 2014/147238

(56) Documents cités:
- EP-A2- 0 325 194
- DE-A1- 3 006 409
- FR-A1- 2 503 319
- GB-A- 1 216 646
- US-A- 1 541 757
- US-A- 1 582 938

## Description

La présente invention concerne une valve d'écoulement unidirectionnel pour autoriser un écoulement de fluide unidirectionnel entre un orifice d'entrée et un orifice de sortie de la valve.

FR 2 503 319 divulgue une telle valve.

GB1216646A, US1582938A, US1541757A, EP0325194A2 et DE3006409A1 divulguent des valves.

Il est possible d'équiper un circuit fluidique d'une chaudière de réacteur nucléaire de valves d'écoulement unidirectionnel.

Il est possible d'effectuer des opérations de maintenance sur un circuit de chaudière, comme par exemple le remplacement d'un conduit défectueux ou d'un organe de commande de l'écoulement du fluide défectueux, par exemple une vanne, en particulier une électrovanne.

Après des opérations de maintenance, il est nécessaire de tester le circuit avant sa remise en fonctionnement. Par exemple, un test consiste à isoler fluidiquement et mettre sous pression une partie du circuit sur laquelle a été effectuée une opération de maintenance, afin de détecter la présence éventuelle de fuites suite à l'opération de maintenance.

Un des buts de l'invention est de proposer une valve d'écoulement unidirectionnel permettant de faciliter les opérations de maintenance et de remise en fonctionnement d'un circuit fluidique.

A cet effet, l'invention propose une valve selon la revendication 1. Selon des modes de réalisation particuliers, la valve peut comprendre une ou plusieurs des caractéristiques des revendications 2 à 11.

L'invention concerne également une chaudière selon la revendication 12.

L'invention et ses avantages seront mieux compris à la lecture de la description qui va suivre, donnée uniquement à titre d'exemple, et faite en référence aux dessins annexés, sur lesquels :
- la Figure 1 est une vue schématique en coupe d'une valve d'écoulement unidirectionnel dans une configuration d'écoulement unidirectionnel ;
- la Figure 2 est une vue analogue à celle de la figure 1 de la valve dans une configuration de fermeture forcée ;
- la Figure 3 est une vue analogue à celle de la figure 1 illustrant la valve dans une configuration d'ouverture forcée.

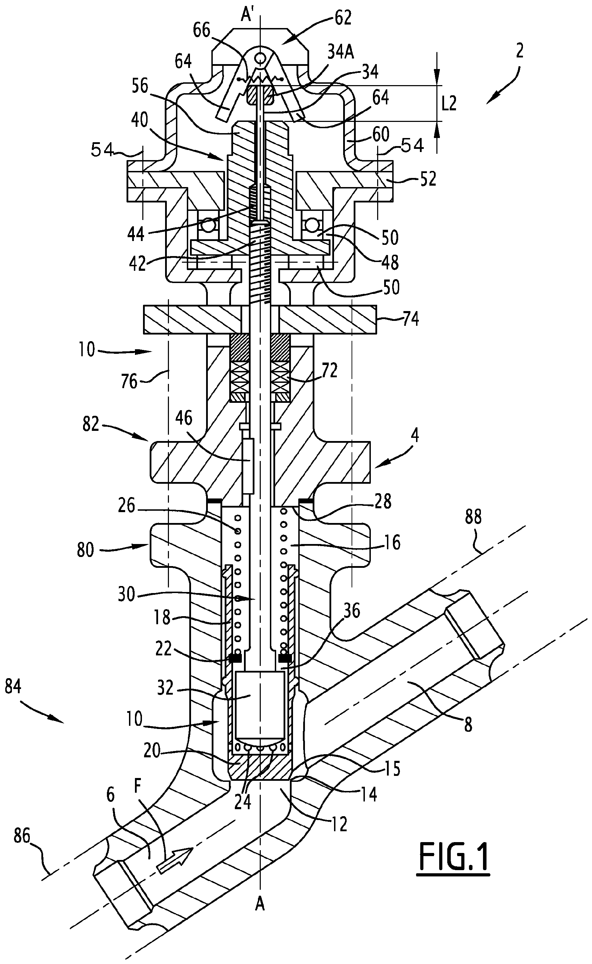

La valve 2 d'écoulement unidirectionnel de la figure 1 est prévue pour autoriser un écoulement unidirectionnel d'un fluide au travers de la valve.

La valve 2 comprend un corps 4 comprenant un orifice d'entrée 6 pour l'entrée du fluide et un orifice de sortie 8 pour la sortie du fluide.

La valve 2 comprend un clapet 10 anti-retour monté mobile à l'intérieur du corps 4 de manière à se fermer et à s'ouvrir pour permettre un écoulement unidirectionnel du fluide de l'orifice d'entrée 6 vers l'orifice de sortie 8.

En position fermée, le clapet 10 sépare de manière étanche l'orifice d'entrée 6 et l'orifice de sortie 8. En position ouverte, l'orifice d'entrée 6 et l'orifice de sortie 8 sont reliés fluidiquement.

L'orifice d'entrée 6 et l'orifice de sortie 8 communiquent fluidiquement par l'intermédiaire d'une ouverture d'écoulement 12, entourée par un siège de clapet 14 annulaire.

En position fermée, le clapet 10 ferme de manière étanche l'ouverture d'écoulement 12. Le clapet 10 est en contact étanche avec le siège de clapet 14.

En position ouverte, le clapet 10 libère l'ouverture d'écoulement 12 pour permettre l'écoulement du fluide au travers de celle-ci. Le clapet 10 est écarté du siège de clapet 14.

Le clapet 10 possède une surface d'étanchéité 15 par laquelle il est en contact étanche avec le siège de clapet 14 lorsque le clapet 10 est fermé. La surface d'étanchéité 15 est ici tronconique.

Le clapet 10 est monté coulissant suivant un axe longitudinal A-A'. Le clapet 10 est monté coulissant dans une chambre 16 ménagée à l'intérieur du corps.

La chambre 16 s'étend suivant l'axe longitudinal A-A' et débouche à l'intérieur de l'orifice de sortie 8 en regard de l'ouverture d'écoulement 12.

Le clapet 10 comprend une partie de support 18 et une partie d'étanchéité 20 portée par la partie de support 18. La partie de support 18 est reçue à coulissement suivant l'axe longitudinal A-A' dans la chambre 16. La partie d'étanchéité 20, est configurée pour fermer de manière étanche l'ouverture d'écoulement 12, en particulier pour venir en contact étanche contre le siège de clapet 14. La partie d'étanchéité 20 porte la surface d'étanchéité 15.

La partie de support 18 est allongée suivant l'axe longitudinal A-A'. Elle est fermée par la partie d'étanchéité 20 à une extrémité axiale adjacente à l'ouverture d'écoulement 12 et ouverte à l'autre extrémité axiale opposée.

Le clapet 10 comprend un épaulement interne 22 prévu à l'intérieur de la partie de support 18. L'épaulement interne 22 est ici formé par un anneau élastique (ou « circlips ») rapporté à l'intérieur de la partie de support 18.

Le clapet 10 est agencé de manière à s'ouvrir et se fermer sous l'effet de la différence de pression du fluide entre l'orifice d'entrée 6 et l'orifice de sortie 8.

Plus spécifiquement, le clapet 10 est agencé de manière qu'une pression dans l'orifice d'entrée 6 supérieure à une pression dans l'orifice de sortie 8 sollicite le clapet 10 en position ouverte, et qu'une pression dans l'orifice d'entrée 6 inférieure à une pression dans l'orifice de sortie 8 sollicite le clapet 10 en position fermée.

Ainsi, le fluide circule au travers de la valve uniquement de l'orifice d'entrée 6 vers l'orifice de sortie 8, comme illustré par la Flèche F sur la Figure 1.

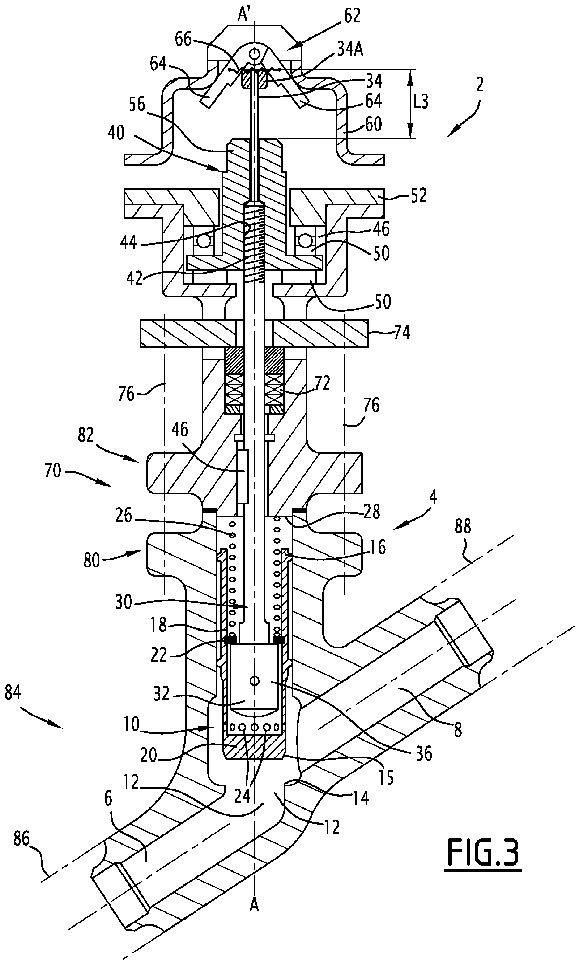

Dans l'exemple illustré, la partie de support 18 comprend des trous 24 (Figures 1 et 3) à proximité de la partie d'étanchéité 20, permettant au fluide présent dans l'orifice de sortie 8 de pénétrer à l'intérieur de la partie de support 18 et d'exercer une pression sur la partie d'étanchéité 20. Ces trous 24 autorisent la libre circulation du fluide dans la chambre 16 sans entraver le mouvement du clapet 10 sous les effets des variations de pression/débit du fluide. Ils évitent l'effet d'amortisseur hydraulique qui interviendrait en leur absence.

La valve 2 comprend un ressort de rappel de clapet 26 disposé de manière à solliciter le clapet 10 en position fermée, en permanence. Le ressort de rappel de clapet 26 est ici un ressort hélicoïdal s'étendant suivant l'axe longitudinal A-A'. Le ressort de rappel de clapet 26 est disposé dans la chambre 16 entre le clapet 10 et une paroi de fond 28 fermant la chambre à son extrémité opposée à l'orifice de sortie 8.

Dans l'exemple illustré, le ressort de rappel de clapet 26 pénètre à l'intérieur de la partie de support 18 et prend appui sur l'épaulement interne 22 de manière à pousser axialement le clapet 10 en position de fermeture de l'ouverture d'écoulement 12.

Du fait de la présence du ressort de rappel de clapet 26, le clapet 10 s'ouvre seulement lorsque la différence entre la pression dans l'orifice d'entrée 6 et la pression dans l'orifice de sortie 8 dépasse un seuil déterminé correspondant à l'effort de rappel exercé par le ressort de rappel de clapet 26.

La valve 2 comprend un organe de commande 30 montée mobile sur le corps 4 en étant lié au clapet 10 avec un jeu de débattement permettant un débattement du clapet 10 par rapport à l'organe de commande 30 sur une course limitée.

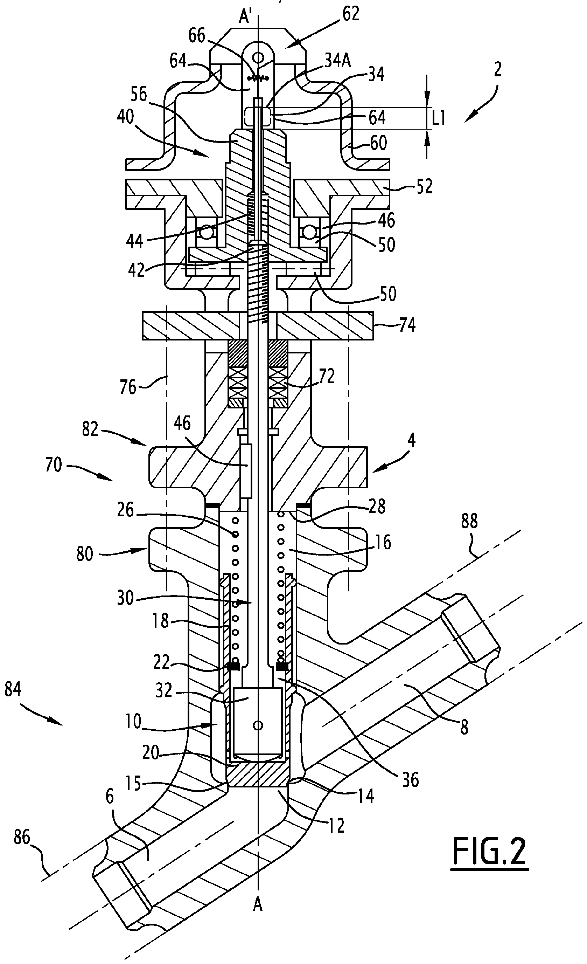

L'organe de commande 30 est déplaçable dans une position d'écoulement unidirectionnel (Figure 1) dans laquelle le jeu de débattement autorise la fermeture et l'ouverture du clapet 10, dans une position de fermeture forcée (Figure 2) dans laquelle l'organe de commande 30 immobilise le clapet 10 en position fermée, et dans une position d'ouverture forcée (Figure 3) dans laquelle l'organe de commande 30 immobilise le clapet 10 en position ouverte.

L'organe de commande 30 est monté coulissant par rapport au corps 4 suivant l'axe longitudinal A-A'.

L'organe de commande 30 est prévu ici sous la forme d'une tige de commande allongée s'étendant suivant l'axe longitudinal A-A'.

L'organe de commande 30 possède une première extrémité 32 reliant l'organe de commande 30 au clapet 10 et une deuxième extrémité 34 faisant saillie à l'extérieur du corps 4.

La première extrémité 32 est reçue dans un logement 36 prévu sur le clapet 10. Le jeu de débattement est ménagé entre la première extrémité 32 et le logement 36. La différence de longueur axiale entre le logement 36 et la première extrémité 32 correspond au jeu de débattement.

Le logement 36 est ici défini à l'intérieur de la partie de support 18, axialement entre la partie d'étanchéité 20 et l'épaulement interne 22.

La valve 2 comprend un organe de manoeuvre 40 lié à l'organe de commande 30 de manière à déplacer l'organe de commande 30 entre les différentes positions de ce dernier.

Dans l'exemple illustré, l'organe de manoeuvre 40 est monté rotatif autour de l'axe longitudinal A-A' sur le corps 4 et lié à l'organe de commande 30 par un système vis/écrou de telle manière qu'une rotation de l'organe de manoeuvre 40 autour de l'axe longitudinal A-A' provoque un coulissement de l'organe de commande 30 suivant l'axe longitudinal A-A'.

Plus spécifiquement, l'organe de commande 30 possède un filetage 42 s'étendant suivant l'axe longitudinal A-A' et l'organe de manoeuvre 40 possède un taraudage 44 complémentaire du filetage 42 et engagé sur le filetage 42.

L'organe de commande 30 est immobilisé en rotation autour de l'axe longitudinal A-A' par rapport au corps 4. A cet effet, la valve 2 comprend ici une clavette 46 disposée entre le corps 4 et l'organe de commande 30. Ceci évite que l'organe de commande 30 pivote avec l'organe de manoeuvre 40 sans se déplacer axialement.

L'organe de manoeuvre 40 est reçu dans une cuvette 48 ménagée dans le corps 4 et guidé en rotation autour de l'axe longitudinal A-A' par l'intermédiaire de butées 50 à billes et à aiguilles.

La valve 2 comprend un couvercle 52 fermant la cuvette 48. Le couvercle 52 est fixé sur le corps 4, par exemple l'aide de boulons 54 schématisés par des traits mixtes. L'organe de manoeuvre 40 et les butées à roulements 50 sont maintenues entre le couvercle 52 et le fond de la cuvette 48.

L'organe de manoeuvre 40 possède une partie d'entraînement 56 pour l'entraînement de l'organe de manoeuvre 40. La partie d'entraînement 56 fait saillie à l'extérieur du corps 4, ici au travers d'une ouverture ménagée dans le couvercle 52.

La partie d'entraînement 56 présente un contour extérieur permettant l'entraînement en rotation à l'aide d'un outil, par exemple d'une clef. La partie d'entraînement 56 présente par exemple un contour carré ou hexagonal. En variante ou en option, la partie d'entraînement 56 possède une empreinte creuse pour l'insertion d'un outil.

La deuxième extrémité 34 de l'organe de commande 30 fait saillie à l'extérieur du corps 4, ici au travers de l'organe de manoeuvre 40, plus particulièrement au travers de sa partie d'entraînement 56. La deuxième extrémité 34 est munie d'une protubérance 34A.

En fonctionnement, la rotation de l'organe de manoeuvre 40 entraîne le déplacement de l'organe de commande 30 par rapport au corps 4 entre la position d'écoulement unidirectionnel, la position de fermeture forcée et la position d'ouverture forcée.

En position d'écoulement unidirectionnel (Figure 1), l'organe de commande 30 est déplacé de manière que le jeu de débattement entre le clapet 10 et l'organe de commande 30 autorise l'ouverture et la fermeture du clapet 10 sous l'effet de la différence de pression entre l'orifice d'entrée 6 et l'orifice de sortie 8 et de l'effort exercé par le ressort de rappel de clapet 26. Dans cette position, la première extrémité 32 est écartée de l'ouverture d'écoulement 12 de sorte que le jeu de débattement permet l'ouverture et la fermeture du clapet 10 sans buter contre la première extrémité 32.

En position de fermeture forcée (Figure 2), l'organe de commande 30 est déplacé de manière qu'il immobilise le clapet 10 en position fermée, indépendamment de la différence de pression entre l'orifice d'entrée 6 et l'orifice de sortie 8. Dans cette position, la première extrémité 32 entre en contact avec la partie d'étanchéité 20 du clapet 10 qui est rapprochée de l'ouverture d'écoulement 12 par rapport à la position d'écoulement unidirectionnel, de sorte qu'elle bloque le clapet 10 en position fermée.

En position d'ouverture forcée (Figure 3), l'organe de commande 30 est déplacé de manière qu'il immobilise le clapet 10 en position ouverte, indépendamment de la différence de pression entre l'orifice d'entrée 6 et l'orifice de sortie 8. Dans cette position, la première extrémité 32 entre en contact avec l'épaulement interne 22 et entraîne le clapet 10 qui est éloigné de l'ouverture d'écoulement 12 par rapport à la position d'écoulement unidirectionnel de sorte que le clapet 10 est empêché d'atteindre la position fermée et reste en position ouverte.

La position d'écoulement unidirectionnel est une position intermédiaire entre la position de fermeture forcée et la position d'ouverture forcée.

La valve 2 comprend un capot 60 configuré pour être fixé de manière amovible sur le corps 4 en coiffant l'organe de manoeuvre 40, plus particulièrement la partie d'entraînement 56 de l'organe de manoeuvre 40 faisant saillie du corps 4.

Le capot 60 comprend un dispositif de sécurité 62 autorisant le montage du capot 60 uniquement lorsque l'organe de commande 30 est en position d'écoulement unidirectionnel, et interdisant le montage du capot 60 lorsque l'organe de commande 30 est en position de fermeture forcée et lorsque l'organe de commande 30 en position d'ouverture forcée.

Le dispositif de sécurité 62 est configuré pour interagir avec la deuxième extrémité 34 de l'organe de commande 30 et l'organe de manoeuvre 40, différemment en fonction de la position de l'organe de commande 30.

Le dispositif de sécurité 62 comprend au moins un organe de sécurité 64 monté mobile sur le capot 60 entre une position de montage (Figure 1) dans laquelle l'organe de sécurité 64 autorise le montage du capot 60 lorsque l'organe de commande 30 est en position d'écoulement unidirectionnel, une première position de blocage (Figure 2) dans laquelle l'organe de sécurité 64 interfère avec l'organe de manoeuvre 40 pour interdire le montage du capot 60 lorsque l'organe de commande 30 est en position de fermeture forcé, et une deuxième position de blocage (Figure 3), dans laquelle l'organe de sécurité 64 interfère avec la deuxième extrémité 34 de l'organe de commande pour interdire le montage du capot 60 lorsque l'organe de commande 30 est en position d'ouverture forcée.

Chaque organe de sécurité 64 est rappelé vers sa première position de blocage par un ressort de rappel de sécurité 66 et est déplacé à partir de sa première position de blocage vers sa deuxième position de blocage et vers sa position de montage par la deuxième extrémité 34 de l'organe de commande 30 lors du montage du capot 60.

Le dispositif de sécurité 62 comprend ici deux organes de sécurité 64 montés rotatifs sur le capot 60. Les organes de sécurité 64 dans leur première position de blocage sont rapprochés l'un de l'autre et la deuxième extrémité 34 de l'organe de commande 30 tend à écarter les organes de sécurité 64 l'un de l'autre. Le ressort de rappel de sécurité 66 est disposé entre les organes de sécurité 64 pour exercer un effort de rappel des organes de sécurité 64 l'un vers l'autre. Plus la deuxième extrémité 34 fait saillie du corps 4, plus elle écarte les organes de sécurité 64 à l'encontre du ressort de rappel de sécurité 66.

Lorsque l'organe de commande 30 est en position de fermeture forcée (Figure 2), sa deuxième extrémité 34 dépasse de l'organe de manoeuvre 40 sur une première longueur L1 suivant l'axe longitudinal A-A'. Lors du montage du capot 60, les organes de sécurité 64 restent rapprochés l'un de l'autre dans leurs premières positions de blocage, dans laquelle ils butent contre l'organe de manoeuvre 40 lors du montage du capot 60. Il subsiste un jeu entre le capot 60 et le corps 4 qui interdit la fixation correcte du capot 60. On notera que la deuxième extrémité 34 est ici reçue dans un logement ménagé entre les deux organes de sécurité 64.

Lorsque l'organe de commande est en position d'écoulement unidirectionnel (Figure 1), sa deuxième extrémité 34 dépasse de l'organe de manoeuvre 40 sur une deuxième longueur L2 suivant l'axe longitudinal A-A' plus grande que la première longueur L1. Lors du montage du capot 60, les organes de sécurité 64 sont écartés l'un de l'autre par la deuxième extrémité 34 de l'organe de commande 30 de telle sorte que les organes de sécurité n'interfèrent pas avec l'organe de manoeuvre 40 et autorisent la fixation correcte du capot 60.

Lorsque l'organe de commande est en position d'ouverture forcée (Figure 3), sa deuxième extrémité 34 dépasse de l'organe de manoeuvre 40 sur une troisième longueur L3 suivant l'axe longitudinal A-A' plus grande que la deuxième longueur L2. Lors du montage du capot 60, les organes de sécurité 64 sont écartés par la deuxième extrémité 34 dans leur deuxième position de blocage, de telle manière que le capot 60 bute sur la deuxième extrémité 34, interdisant la fixation correcte du capot 60.

La valve 2 comprend un dispositif d'étanchéité 70 pour assurer l'étanchéité entre l'organe de commande 30 et le corps 4. Le dispositif d'étanchéité 70 comprend une étoupe 72 disposée entre le corps 4 et l'organe de commande 30, l'étoupe 72 étant mise en compression à l'aide d'une barre de presse-étoupe 74, par exemple à l'aide de boulons 76 coopérant avec le corps 4 et représentés schématiquement par des traits mixtes.

Comme illustré sur les Figures 1 à 3, le corps 4 est réalisé en deux parties fixées l'une sur l'autre. Le corps comprend une première partie de corps 80 dans laquelle sont ménagés l'orifice d'entrée 6, l'orifice de sortie 8 et la chambre 16, et une deuxième partie de corps 82 dans laquelle est ménagée la cuvette 48. Le capot 60 est prévu pour être fixé sur la deuxième partie de corps 82 à son extrémité opposée à la première partie de corps 80.

La deuxième partie de corps 82 est fixée sur la première partie de corps 80 de manière à fermer la chambre 16. Le ressort de rappel de clapet 26 est disposé axialement entre le clapet 10 et la deuxième partie du corps 82. L'organe de commande 30 traverse la deuxième partie de corps 82.

La deuxième partie de corps 82 est fixée sur la première partie de corps 80 par exemple à l'aide de boulons, en particulier à l'aide des boulons distincts de ceux servant au serrage de la barre presse-étoupe 74.

Comme illustré sur les Figures 1 à 3, une chaudière 84, notamment une chaudière de réacteur nucléaire, comprend un circuit fluidique possédant un conduit amont 86 et un conduit aval 88 (représentés en traits mixtes) raccordés fluidiquement par la valve 4. Le conduit amont 86 est raccordé à l'orifice d'entrée 6 et le conduit aval 88 est raccordé à l'orifice de sortie 8.

Les termes « amont » et « aval » s'entendent par référence au sens d'écoulement du fluide dans la valve anti-retour, illustré par la flèche F sur la Figure 1.

En cas d'opération de maintenance en amont de la valve 2, le capot 60 est retiré et l'organe de manoeuvre 40 est manoeuvré pour déplacer l'organe de commande 30 en position de fermeture forcée. La valve 2 est ainsi maintenue fermée, de sorte que le conduit amont 86 est isolé fluidiquement du conduit aval 88. Une fois l'opération de maintenance effectuée, le conduit amont 86 est mis sous pression pour vérifier la présence éventuelle de fuites à la suite des opérations de maintenance. Ceci constitue une épreuve hydraulique de mise sous pression. Ensuite, l'organe de manoeuvre 30 est manoeuvré pour déplacer l'organe de commande 30 en position d'écoulement unidirectionnel, et le capot 60 est monté sur le corps 4.

La fermeture forcée permet donc de garantir l'isolement fluidique de la partie de circuit située en amont du clapet 10. Cette disposition permet par exemple la réalisation d'épreuves hydrauliques sur un tronçon limité de circuit.

La valve 2 permet donc d'isoler fluidiquement une zone du circuit sur laquelle une intervention est effectuée, ce qui limite la zone du circuit à vérifier à l'issue des opérations de maintenance. Les opérations de maintenance et de remise en fonctionnement sont donc facilitées. La valve 2 est de conception et de fonctionnement simple, ce qui est un gage de fiabilité.

Un circuit de chaudière de réacteur nucléaire possède un grand nombre de valves à manoeuvrer pour isoler fluidiquement une partie du circuit de chaudière. Il est possible qu'un opérateur oublie de remettre une valve en configuration d'écoulement unidirectionnel, ce qui pourrait avoir de graves conséquences lors de la remise en fonctionnement de la chaudière.

Néanmoins, dans ce cas, l'opérateur ne peut monter le capot sur le corps de valve, ce qui lui signal l'existence d'un problème et lui permet d'y remédier.

La valve 2 facilite donc la remise en fonctionnement en permettant aux opérateurs de vérifier facilement que la valve 2 est dans la configuration adéquate pour une remise en fonctionnement.

La valve 2 permet en outre de bloquer le clapet en position ouverte, ce qui offre une fonctionnalité supplémentaire, en fonction des opérations de maintenance que l'on souhaite réaliser. La position d'ouverture forcée permet d'inhiber transitoirement la fonction « non retour » dans le cadre d'opérations spécifiques de maintenance. Elle permet par exemple en phase de maintenance, de pouvoir assurer un écoulement unidirectionnel en sens inverse de l'écoulement normal indiqué par la flèche F (Figure1).

L'invention s'applique aux chaudières de réacteur nucléaire. De manière générale, elle s'applique à toute chaudière. De manière encore plus générale, l'invention s'applique à une valve pour un circuit fluidique quelconque.

## Revendications

1. Valve comprenant un corps (4) possédant un orifice d'entrée (6) et un orifice de sortie (8), un clapet (10) anti-retour monté mobile par rapport au corps (4), et un organe de commande (30) monté mobile par rapport au corps (4) et relié au clapet (10) avec un jeu de débattement, l'organe de commande (30) étant déplaçable dans une position d'écoulement unidirectionnel dans laquelle le jeu de débattement autorise l'ouverture et la fermeture du clapet (10), et dans une position de fermeture forcée dans laquelle l'organe de commande (30) immobilise le clapet (10) en position fermée, la valve comprenant un organe de manoeuvre (40) pour commander le déplacement de l'organe de commande (30), et un capot (60) amovible destiné à être fixé sur le corps en coiffant l'organe de manoeuvre (40) et une extrémité saillante (34) de l'organe de commande (30) faisant saillie du corps (4).

2. Valve selon la revendication 1, dans laquelle l'organe de commande (30) est déplaçable dans une position d'ouverture forcée dans laquelle l'organe de commande (30) immobilise le clapet (10) en position ouverte.

3. Valve selon la revendication 1 ou 2, dans laquelle le clapet (10) est monté coulissant suivant un axe longitudinal (A-A') par rapport au corps, le jeu de débattement autorisant le débattement du clapet (10) par rapport à l'organe de commande (30) suivant l'axe longitudinal.

4. Valve selon la revendication 3, dans laquelle l'organe de commande (30) est monté coulissant par rapport au corps (4) suivant l'axe longitudinal (A-A').

5. Valve selon l'une quelconque des revendications précédente, dans laquelle une extrémité (32) de l'organe de commande (30) est reçue dans un logement (36) prévu sur le clapet (10) pour relier l'organe de commande (30) au clapet (10).

6. Valve selon l'une quelconque des revendications précédentes, dans lequel l'organe de manoeuvre (40) est lié à l'organe de commande (30) par un système vis/écrou de telle sorte que la rotation de l'organe de manoeuvre (40) provoque un coulissement de l'organe de commande (30).

7. Valve selon l'une quelconque des revendications précédentes, dans lequel le capot (60) est muni d'un dispositif de sécurité (62) autorisant ou interdisant le montage du capot sur le corps sélectivement en fonction de la position de l'organe de commande (30).

8. Valve selon la revendication 7, dans lequel le dispositif de sécurité (62) autorise le montage du capot sur le corps uniquement lorsque l'organe de commande est en position d'écoulement unidirectionnel.

9. Valve d'écoulement unidirectionnel selon la revendication 7 ou 8, dans laquelle le dispositif de sécurité (62) comprend au moins un organe de sécurité (64) monté mobile sur le capot entre une position de montage autorisant le montage du capot et au moins une position de blocage interdisant le montage du capot, le ou chaque organe de sécurité étant déplacé par l'extrémité saillante de l'organe de commande lors du montage du capot, en fonction de la position de l'organe de commande.

10. Valve d'écoulement unidirectionnel selon la revendication 9, comprenant deux organes de sécurité (64), l'extrémité saillante de l'organe de commande écartant les organes de sécurité (64) lors du montage du capot (60) en fonction de la position de l'organe de commande (30).

11. Valve d'écoulement unidirectionnel selon la revendication 10, comprenant un ressort de rappel de sécurité sollicitant les organes de sécurité (64) de manière à les rapprocher l'un de l'autre.

12. Chaudière, notamment de réacteur nucléaire, comprenant au moins une valve selon l'une quelconque des revendications précédentes.

## Patentansprüche

1. Ventil, einen Körper (4) umfassend, der eine Eintrittsöffnung (6) und eine Austrittsöffnung (8) besitzt, wobei ein Rückschlagventil (10) in Bezug auf den Körper (4) beweglich montiert ist und ein Steuerelement (30) in Bezug auf den Körper beweglich angeordnet ist und mit dem Ventil (10) mit einem Ausschlagspiel verbunden ist, wobei das Steuerelement (30) in eine Stellung einer Strömung in nur eine Richtung, in der das Ausschlagspiel das Öffnen und das Schließen des Ventils (10) zulässt, und in eine Stellung des erzwungenen Schließens bewegbar ist, in der das Steuerelement (30) das Ventil (10) in der geschlossenen Stellung festlegt, wobei das Ventil ein Betätigungselement (40) zum Steuern der Bewegung des Steuerelements (30) und eine lösbare Abdeckung (60) umfasst, die vorgesehen ist, an dem Körper befestigt zu werden, wobei das Betätigungselement (40) und ein hervorspringendes Ende (34) des Steuerelements (30), das aus dem Körper (4) herausragt, überdeckt werden.

2. Ventil nach Anspruch 1, bei dem das Steuerelement (30) in eine Stellung der erzwungenen Öffnung bewegbar ist, in der das Steuerelement (30) das Ventil (10) in der Offenstellung festlegt.

3. Ventil nach Anspruch 1 oder 2, bei dem das Ventil (10) gemäß einer Längsachse (A-A') in Bezug auf den Körper gleitend montiert ist, wobei das Ausschlagspiel den Ausschlag des Ventils (10) in Bezug auf das Steuerelement (30) gemäß der Längsachse zulässt.

4. Ventil nach Anspruch 3, bei dem das Steuerelement (30)) gemäß der Längsachse (A-A') in Bezug auf den Körper (4) gleitend montiert ist.

5. Ventil nach einem beliebigen der vorhergehenden Ansprüche, bei dem ein Ende (32) des Steuerelements (30) in einem an dem Ventil (10) vorgesehenen Aufnahmeraum (36) aufgenommen ist, um das Steuerelement (30) mit dem Ventil (10) zu verbinden.

6. Ventil nach einem beliebigen der vorhergehenden Ansprüche, bei dem das Betätigungselement (40) mit dem Steuerelement (30) durch ein Schrauben-Mutternsystem derart verbunden ist, dass die Drehung des Betätigungselements (40) eine Verschiebung des Steuerelements (30) hervorruft.

7. Ventil nach einem beliebigen der vorhergehenden Ansprüche, bei dem die Abdeckung (60) mit einer Sicherheitsvorrichtung (62) ausgerüstet, die die Montage der Abdeckung auf dem Körper selektiv abhängig von der Stellung des Steuerelements (30) zulässt oder verbietet.

8. Ventil nach Anspruch 7, bei dem die Sicherheitsvorrichtung (62) die Montage der Abdeckung an dem Körper nur zulässt, wenn das Steuerelement in der Stellung der Strömung in nur eine Richtung angeordnet ist.

9. Ventil für eine Strömung in nur eine Richtung nach Anspruch 7 oder 8, bei dem die Sicherheitsvorrichtung (62) mindestens ein Sicherheitselement (64) umfasst, das an der Abdeckung zwischen einer Montageposition, die die Montage der Abdeckung zulässt, und mindestens einer Sperrposition, die die Montage der Abdeckung verbietet, beweglich montiert ist, wobei das oder jedes Sicherheitselement durch das vorspringende Ende des Steuerelements bei der Montage der Abdeckung abhängig von der Stellung des Steuerelements verschiebbar ist.

10. Ventil für eine Strömung in nur eine Richtung nach Anspruch 9, zwei Sicherheitselemente (64) umfassend, wobei das vorspringende Ende des Steuerelements die Sicherheitselemente (64) bei der Montage der Abdeckung (60) abhängig von der Stellung des Steuerelements (30) spreizt.

11. Ventil für eine Strömung in nur eine Richtung nach Anspruch 10, eine Sicherheitsrückstellfeder umfassend, die die Sicherheitselemente (64) so vorspannt, dass sie sich einander angenähern.

12. Kessel, insbesondere eines Nuklearreaktors, umfassend mindestens ein Ventil nach einem beliebigen der vorhergehenden Ansprüche.

## Claims

1. Valve comprising a body (4) having an inlet opening (6) and an outlet opening (8), a check-valve (10) mounted movably with respect to the body (4), and a control element (30) mounted movably with respect to the body (4) and connected to the check-valve (10) with clearance, the control element (30) being movable in a unidirectional flow position in which the clearance permits the opening and closing of the check-valve (10), and in a forced-closed position in which the control element (30) immobilises the check-valve (10) in the closed position, the valve comprising a drive element (40) for controlling the movement of the control element (30), and a removable cover (60) intended to be secured to the body while capping the drive element (40) and a protruding end (34) of the control element (30) protruding from the body (4).

2. Valve according to claim 1, wherein the control element (30) is movable into a forced-open position in which the control element (30) immobilises the check-valve (10) in the open position.

3. Valve according to claim 1 or 2, wherein the check-valve (10) is slidably mounted along a longitudinal axis (A-A') with respect to the body, the clearance permitting the clearance of the check-valve (10) with respect to the control element (30) along the longitudinal axis.

4. Valve according to claim 3, wherein the control element (30) is slidably mounted with respect to the body (4) along the longitudinal axis (A-A').

5. Valve according to any one of the preceding claims, wherein one end (32) of the control element (30) is received in a receptacle (36) provided on the check-valve (10) to connect the control element (30) to the check-valve (10).

6. Valve according to any one of the preceding claims, wherein the actuating element (40) is connected to the control element (30) by a screw/nut system in such a way that the rotation of the actuating element (40) causes a sliding of the control element (30).

7. Valve according to any one of the preceding claims, wherein the cover (60) is fitted with a safety device (62) selectively permitting or prohibiting the mounting of the cover on the body depending on the position of the control element (30).

8. Valve according to claim 7, wherein the safety device (62) permits the mounting of the cover on the body only when the control element is in the unidirectional flow position.

9. Unidirectional flow valve according to claim 7 or 8, wherein the safety device (62) comprises at least one safety element (64) movably mounted on the cover between a mounting position authorising the mounting of the cover and at least one blocking position prohibiting the mounting of the cover, the or each safety element being moved by the protruding end of the control element during the mounting of the cover, depending on the position of the control element.

10. Unidirectional flow valve according to claim 9, comprising two safety elements (64), the protruding end of the control element spreading the safety elements (64) during the mounting of the cover (60) depending on the position of the control element (30).

11. Unidirectional flow valve according to claim 10, comprising a safety return spring that pulls the safety elements (64) such that they are drawn towards each other.

12. Boiler, particularly of a nuclear reactor, comprising at least one valve according to any one of the preceding claims.
